# EUROPEAN PATENT APPLICATION

(11) **EP 4 670 968 A1**
(43) Date of publication of application: **31.12.2025**
(21) Application number: 25182051.0
(22) Date of filing: 11.06.2025
(51) Int. Cl.: B32B 17/10, B32B 7/12, B32B 27/08, B32B 27/36, C08K 3/04, H05B 3/84

(54) **LAMINATE, METHOD FOR PRODUCING LAMINATE, AND USE OF DOPANT FOR REDUCING DEGRADATION OF LAMINATE**

(30) Priority: 28.06.2024 FI 20245840
(71) Applicant: Canatu Finland Oy, 01720 Vantaa (FI)
(72) Inventor: Soliman, Ahmed, Vantaa (FI); Juntunen, Taneli, Vantaa (FI)
(74) Representative: Primrose Oy

(57) **Abstract**

The disclosure relates to a laminate (1). The laminate (1) comprises a first layer (11) comprising at least one allotrope of carbon and a dopant. The laminate (1) comprises a second layer (12) comprising organic material. The concentration of dopant in the first layer (11) is 25 to 1000 nmol/cm², based on the surface area of the first layer (11).

The disclosure relates also to a method for producing a laminate (1). The method comprises providing a first layer (11) comprising at least one allotrope of carbon and a dopant. The method comprises providing a second layer (12) comprising organic material. The concentration of dopant in the first layer (11) is 25 to 1000 nmol/cm².

The disclosure relates also to the use of a dopant in a concentration of 25 to 1000 nmol/cm² for reducing degradation of a laminate.

## Description

### FIELD OF THE DISCLOSURE

The present disclosure relates to laminates and more particularly to laminates comprising doped allotrope of carbon. The present disclosure further concerns a method for producing a laminate and use of dopant for reducing degradation of a laminate.

### BACKGROUND OF THE DISCLOSURE

Carbon nanotubes can be used to provide a functional layer to a laminate. For example, in a laminated vehicle windshield, carbon nanotubes can be used to provide a heating element to the laminated windshield, which serves the purposes of defrosting, de-icing, and preventing fog buildup.

Dopant is used to modify the properties of the carbon nanotubes. For example, the dopant improves the electrical conductivity of the carbon nanotubes. The layer containing carbon nanotubes and dopant may be laminated, for example, with a glass layer using optical clear adhesive (OCA) and a binding layer, such as polyvinyl butyral (PVB) or thermoplastic polyurethane (TPU).

A problem relating to a laminate as described above is that the laminate degrades over time due to sunlight. This is because the optical clear adhesive, or components diffused or leached from the optical clear adhesive, for example due to the chemical breakdown of the optical clear adhesive, neutralizes the dopant under ultraviolet radiation contained in the sunlight. This can be observed as increased electrical resistance of the functional layer.

### BRIEF DESCRIPTION OF THE DISCLOSURE

An object of the present disclosure is to provide a laminate, a method for producing a laminate, and a use of dopant to overcome above problem.

The object of the disclosure is achieved by the laminate, method and use which are characterized by what is stated in the independent claims. The preferred embodiments of the disclosure are disclosed in the dependent claims.

The disclosure is based on the idea of providing a laminate which comprises a first layer comprising at least one allotrope of carbon and a dopant for improving the electrical conductivity of the first layer, and a second layer comprising organic material; wherein the concentration of dopant in the first layer is 25 to 1000 nmol/cm². In other words, the concentration of the dopant used in first layer of the laminate of the disclosure is several times, such as 2 to 50 times, the concentration needed to improve the electrical conductivity of the first layer.

An advantage of the disclosure is that the excess dopant used in the first layer acts as sacrificial dopant. This reduces the degradation rate of the laminate due to ultraviolet radiation to an acceptable level, such as beyond the lifetime of the product utilizing the laminate, e.g. vehicle windshield.

### FIGURES

The disclosure is described in detail by means of specific embodiments with reference to the enclosed drawings, in which
Figure 1 is a schematic cross sectional view of a laminate according to some embodiments of the disclosure;
Figure 2 is a schematic cross sectional view of a laminate according to some embodiments of the disclosure; and
Figure 3 is a schematic cross sectional view of a laminate according to some embodiments of the disclosure.

### DETAILED DESCRIPTION OF THE DISCLOSURE

### Laminate

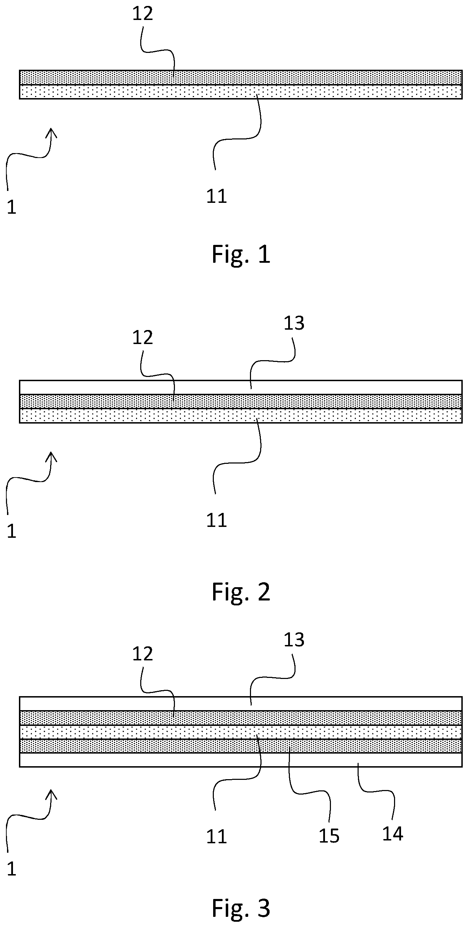

The disclosure relates to a laminate. The laminate 1 comprises a first layer 11 and a second layer 12, as exemplified in Figure 1. For example, the thickness of the first layer is 25 to 400 µm, and the thickness of the second layer is 100 to 1000 µm. The first layer 11 and the second layer 12 are adhered to each other. For example, the laminate 1 can be used in vehicle windshields, vehicle mirrors, vehicle headlights and taillights, vehicle dashboards, such as in touch screens and infotainment screens used in vehicle dashboards, security and surveillance cameras, and lidars, such as in lidar sensor covers.

According to some embodiments, the laminate 1 comprises a first substrate layer 13 in addition to the first layer 11 and the second layer 12, as exemplified in Figure 2. The first substrate layer 13 is a layer consisting of glass, polyethylene terephthalate (PET), polycarbonate (PC), polyethylene naphthalate (PEN), or cyclic olefin polymer (COP). The second layer 12 is arranged between the first layer 11 and the first substrate layer 13.

According to some embodiments, the laminate 1 comprises a second substrate layer 14 in addition to the first substrate layer 13, as exemplified in Figure 3. The second substrate layer 14 is a layer consisting of glass, polyethylene terephthalate (PET), polycarbonate (PC), polyethylene naphthalate, or cyclic olefin polymer (COP). The first layer 11 and the second layer 12 are arranged between the first substate layer 13 and the second substrate layer 14 to form a sandwiched structure.

According to some embodiments, the sandwiched structure comprises further layers 15, such as an adhesive layer or a reinforcement layer, as exemplified in Figure 3. For example, the sandwiched structure can be used as a vehicle windshield, vehicle mirror, vehicle headlight cover, vehicle taillight cover, touch screen used in a vehicle dashboard, infotainment screen used in a vehicle dashboard, a lens in security or surveillance camera, or lidar sensor cover.

### First layer

The purpose of the first layer 11 is to act as a functional layer. In other words, the first layer 11 provides a function to the laminate 1. For example, the first layer 11 acts as a heater in the laminate 1.

According to some embodiments, the first layer 11 comprises transparent flexible polymer film, such as film made of PET, PC, PEN or COP. The purpose of the transparent flexible polymer film is to act as a carrier and support for any functional part in the first layer 11.

### Allotrope of carbon

The first layer 11 comprises at least one allotrope of carbon. In this context, term "allotrope" means structurally different form of the same element, carbon in this case. According to some embodiments, the at least one allotrope of carbon is provided as a thin coating on the transparent flexible polymer film. For example, the thickness of the coating of the at least one allotrope of carbon is 0.2 to 1000 nm.

Preferably, the at least one allotrope of carbon is electrically conductive allotrope of carbon.

The purpose of the allotrope of carbon is to act as a functional part in the first layer 11. For example, the allotrope of carbon allows the first layer 11 to act as a heater in the laminate 1.

According to some embodiments, the at least one allotrope of carbon is carbon nanotube or graphene. In other words, the first layer 11 comprises carbon nanotubes or graphene.

### Dopant

The first layer 11 comprises a dopant for improving the electrical conductivity of the first layer 11.

According to some embodiments, the dopant comprises metal ions or their salts.

According to some embodiments, the dopant comprises transitional metal ions or their salts.

According to some embodiments, the dopant is a p-type dopant. P-type dopant is more efficient and more stable than e.g. n-type dopant.

For example, the dopant comprises a cation selected from Ce, Al, Fe, Cu, Sr, Sc, Au, Pt, and Pd, and an anion selected from F, Cl, Br, I, organic acids, such as acetate or formate, and their halogenated and sulfonated versions, such as triflate, trichloroacetate, or methyl sulfonate.

Preferably, the dopant is a dopant complex formed of a dopant ion component encapsulated in a polymer matrix, wherein the dopant ion component is a metal triflate, a metal antimonate, or any combination thereof, and the polymer matrix comprises or consists of a hydroxyl-containing polymer, and wherein the dopant complex is formed of the dopant ion component coupled with the polymer matrix.

The concentration of dopant in the first layer 11 is 25 to 1000 nmol/cm², preferably 30 to 500 nmol/cm², more preferably 35 to 200 nmol/cm², based on the surface area of the first layer 11. If the concentration of the dopant is lower, it does not provide sufficient barrier properties against degradation. If the concentration of the dopant is higher, it causes problems, for example, in relation to solubility of the dopant, which causes crystallization of the dopant. This in turn degrades the transparency of the first layer 11. High concentration of the dopant may also cause discoloration of the first layer 11.

### Second layer

The second layer 12 comprises organic material. The purpose of the second layer 12 is to act as a protective layer in the laminate 1 and to bind the optional first substrate layer 13 to the laminate 1.

In this context, term "organic material" means compounds and materials that contain carbon.

Preferably, the organic material comprises molecules having at least one lone pair of electrons. In other words, the molecules of the organic material have a pair of valence electrons that are not shared with another atom in a covalent bond.

According to some embodiments, the organic material is formed by organic moieties having a formula of CaHβNγOδSε, where α is an integer between 1 to 40, and β, γ, δ, ε, are each independent integer value in the range of 0 to 20. In other words, the organic material may comprise monomers or polymers formed by such organic moieties.

According to some embodiments, the organic material is optical clear adhesive (OCA).

According to some embodiments, the organic material is polyvinyl butyral (PVB), thermoplastic polyurethane (TPU), hindered amine light stabilizers (HALS), epoxy resin, or acrylate.

### Method

The invention relates also to a method for producing a laminate 1. According to some embodiments, the laminate 1 will be provided with a reduced tendency for degradation due to ultraviolet radiation.

According to some embodiments, the laminate 1 is a laminate as described above.

The method comprises providing a first layer 11. The purpose of the first layer 11 is to act as a functional layer.

The first layer 11 comprises at least one allotrope of carbon. Preferably, the at least one allotrope of carbon is electrically conductive allotrope of carbon.

According to some embodiments, the at least one allotrope of carbon is carbon nanotube or graphene. In other words, the first layer 11 comprises carbon nanotubes or graphene.

The first layer 11 comprises a dopant for improving the electrical conductivity of the first layer 11.

According to some embodiments, the dopant comprises metal ions or their salts.

According to some embodiments, the dopant comprises transitional metal ions or their salts.

According to some embodiments, the dopant is a p-type dopant. For example, the dopant comprises a cation selected from Ce, Al, Fe, Cu, Sr, Sc, Au, Pt, and Pd, and an anion selected from F, Cl, Br, I, organic acids, such as acetate or formate, and their halogenated and sulfonated versions, such as triflate, trichloroacetate, or methyl sulfonate.

Preferably, the dopant is a dopant complex formed of a dopant ion component encapsulated in a polymer matrix, wherein the dopant ion component is a metal triflate, a metal antimonate, or any combination thereof, and the polymer matrix comprises or consists of a hydroxyl-containing polymer, and wherein the dopant complex is formed of the dopant ion component coupled with the polymer matrix.

The concentration of dopant in the first layer 11 is 25 to 1000 nmol/cm², preferably 30 to 500 nmol/cm², more preferably 35 to 200 nmol/cm², based on the surface area of the first layer 11.

The method comprises providing a second layer 12. The purpose of the second layer 12 is to act as a protective layer in the laminate 1 and to bind the optional glass layer to the laminate 1.

The second layer 12 comprises organic material. Preferably, the organic material comprises molecules having at least one lone pair of electrons.

According to some embodiments, the organic material is formed by organic moieties having a formula of CaHβNγOδSε, where α is an integer between 1 to 40, and β, γ, δ, ε, are each independent integer value in the range of 0 to 20. In other words, the organic material may comprise monomers or polymers formed by such organic moieties.

### Use

The invention also relates to the use of a dopant in a concentration of 25 to 1000 nmol/cm² for reducing degradation of a laminate, for example due to ultraviolet radiation, heat or moisture.

The laminate 1 comprises a first layer 11 and a second layer 12. The concentration of the dopant is based on the surface area of the first layer 11.

The first layer 11 comprises at least one allotrope of carbon. Preferably, the at least one allotrope of carbon is electrically conductive allotrope of carbon.

According to some embodiments, the at least one allotrope of carbon is carbon nanotube or graphene. In other words, the first layer 11 comprises carbon nanotubes or graphene.

The dopant is comprised in the first layer 11. The purpose of the dopant is to improve the electrical conductivity of the first layer 11.

According to some embodiments, the dopant comprises metal ions or their salts.

According to some embodiments, the dopant comprises transitional metal ions or their salts.

According to some embodiments, the dopant is a p-type dopant. For example, the dopant comprises a cation selected from Ce, Al, Fe, Cu, Sr, Sc, Au, Pt, and Pd, and an anion selected from F, Cl, Br, I, organic acids, such as acetate or formate, and their halogenated and sulfonated versions, such as triflate, trichloroacetate, or methyl sulfonate.

Preferably, the dopant is a dopant complex formed of a dopant ion component encapsulated in a polymer matrix, wherein the dopant ion component is a metal triflate, a metal antimonate, or any combination thereof, and the polymer matrix comprises or consists of a hydroxyl-containing polymer, and wherein the dopant complex is formed of the dopant ion component coupled with the polymer matrix.

The concentration of dopant in the first layer 11 is 25 to 1000 nmol/cm², preferably 30 to 500 nmol/cm², more preferably 35 to 200 nmol/ cm², based on the surface area of the first layer 11.

The second layer 12 comprises organic material. Preferably, the organic material comprises molecules having at least one lone pair of electrons.

According to some embodiments, the organic material is formed by organic moieties having a formula of CaHβNγOδSε, where α is an integer between 1 to 40, and β, γ, δ, ε, are each independent integer value in the range of 0 to 20. In other words, the organic material may comprise monomers or polymers formed by such organic moieties.

According to some embodiments, the organic material is optical clear adhesive (OCA).

According to some embodiments, the organic material is polyvinyl butyral (PVB), thermoplastic polyurethane (TPU), hindered amine light stabilizers (HALS), epoxy resin, or acrylate.

### EXAMPLES

### Example 1 (reference example)

A laminate consisting of a polyethylene terephthalate base and a transparent carbon nanotube-based heater layer laminated with polyvinyl butyral was provided. The heater was doped with p-type dopant complex formed of cerium triflate encapsulated in a copolymer of polyvinyl phenol and polymethyl methacrylate. The dopant concentration was 10.0 nmol/cm², based on the surface area of the laminate.

The heater was exposed to accelerated ageing under 85 °C and 85 % relative humidity for 20 hours. The resistance of the heater was measured before and after the accelerated ageing using with a multimeter using a 2-point probe. Before the accelerated ageing, the resistance of the heater was 130 ohms. After the accelerated ageing, the resistance of the heater was 870 ohms.

### Example 2 (inventive example)

The heater of Example 2 differed from the heater of Example 1 in that the dopant concentration was 100 nmol/cm², based on the surface area of the laminate.

The heater was exposed to accelerated ageing as in Example 1. The resistance of the heater was measured before and after the accelerated ageing using the same method as in Example 1. Before the accelerated ageing, the resistance of the heater was 137 ohms. After the accelerated ageing, the resistance of the heater was 190 ohms.

## Claims

1. A laminate (1), **characterized in that** the laminate (1) comprises
- a first layer (11) comprising at least one allotrope of carbon and a dopant for improving the electrical conductivity of the first layer (11), and
- a second layer (12) comprising organic material;
wherein the concentration of dopant in the first layer (11) is 25 to 1000 nmol/cm², based on the surface area of the first layer (11).

2. The laminate (1) according to claim 1, **characterized in that** the at least one allotrope of carbon is electrically conductive allotrope of carbon.

3. The laminate (1) according to claim 1 or 2, **characterized in that** the at least one allotrope of carbon is carbon nanotube or graphene.

4. The laminate (1) according to any one of the preceding claims, **characterized in that** the organic material comprises molecules having at least one lone pair of electrons.

5. The laminate (1) according to according to claim 4, **characterized in that** the organic material is formed by organic moieties having a formula of CaHβNγOδSε, where α is an integer between 1 to 40, and β, γ, δ, ε, are each independent integer value in the range of 0 to 20.

6. The laminate (1) according to any one of the preceding claims, **characterized in that** the organic material is polyvinyl butyral or thermoplastic polyurethane.

7. The laminate (1) according to any one of the preceding claims, **characterized in that** the first layer (11) comprises polyethylene terephthalate.

8. The laminate (1) according to any one of the preceding claims, **characterized in that** the dopant comprises metal ions or their salts.

9. The laminate (1) according to claim 8, **characterized in that** the dopant comprises transitional metal ions or their salts.

10. The laminate (1) according to any one of the preceding claims, **characterized in that** the dopant is a p-type dopant.

11. The laminate (1) according to any one of the preceding claims, **characterized in that** the laminate (1) comprises a first substrate layer (13).

12. A method for producing a laminate (1), **characterized in that** the method comprises
- providing a first layer (11) comprising at least one allotrope of carbon and a dopant for improving the electrical conductivity of the first layer (11), and
- providing a second layer (12) comprising organic material;
wherein the concentration of dopant in the first layer (11) is 25 to 1000 nmol/cm², based on the surface area of the first layer (11).

13. The method according to claim 12, **characterized in that** the laminate (1) has a reduced tendency for degradation.

14. The method according to claim 12 or 13, **characterized in that** the laminate (1) is a laminate according to any one of claims 1 to 11.

15. Use of a dopant in a concentration of 25 to 1000 nmol/cm² for reducing degradation of a laminate, the laminate (1) comprising
- a first layer (11) comprising at least one allotrope of carbon and the dopant for improving the electrical conductivity of the first layer (11), and
- a second layer (12) comprising organic material; and
the concentration of the dopant is based on the surface area of the first layer (11).
